# EUROPEAN PATENT SPECIFICATION

(11) **EP 1 941 219 B1**
(45) Date of publication and mention of the grant of the patent: **10.10.2018**
(21) Application number: 05823335.4
(22) Date of filing: 26.10.2005
(51) Int. Cl.: F25B 1/04, F04C 28/26, F04C 28/08, F04C 29/04, F25B 41/04, F25B 49/02

(54) **REFRIGERANT SYSTEM WITH PULSE WIDTH MODULATED COMPONENTS AND VARIABLE SPEED COMPRESSOR**
KÄLTEMITTELSYSTEM MIT PULSBREITENMODULIERTEN KOMPONENTEN UND DREHZAHLGEREGELTEM KOMPRESSOR
SYSTÈME FRIGORIFIQUE AVEC COMPOSANTS À MODULATION DE LARGEUR D'IMPULSIONS ET COMPRESSEUR À VITESSE VARIABLE

(43) Date of publication of application: 09.07.2008
(73) Proprietor: Carrier Corporation, Palm Beach Gardens, FL 33418 (US)
(72) Inventor: LIFSON, Alexander, Manlius, NY 13104 (US); SRINIVASAN, Sriram, Manlius, NY 13104 (US)
(74) Representative: Dehns
(86) International application number: PCT/US2005/038726
(87) International publication number: WO 2007/050063

(56) References cited:
- EP-A1- 1 099 918
- EP-A2- 1 087 142
- US-A- 5 079 929
- US-A- 5 123 080
- US-A- 5 431 026
- US-A- 5 628 201
- US-A- 6 058 729
- US-A1- 2003 000 232
- US-A1- 2005 086 957

## Description

### BACKGROUND OF THE INVENTION

This application relates to a control for a refrigerant system having a variable speed compressor, and wherein pulse width modulation technologies are utilized to provide further control over the system.

Refrigerant systems are utilized in many applications to condition an environment. In particular, air conditioners and heat pumps are employed to cool and/or heat air entering the environment. The cooling or heating load of the environment may vary with ambient conditions, occupancy level, other changes in sensible and latent load demands, and as the temperature and/or humidity set points are adjusted by an occupant of the environment.

A feature that is known for improving the efficiency of refrigerant systems is the use of a variable speed drive for the compressor motor. Often, the compressor need not be operated at full speed, such as when the cooling load on the refrigerant system is relatively low. Under such circumstances, it might be desirable to reduce the compressor speed, and thus reduce the overall energy consumption of the refrigerant system. Implementation of a variable speed drive is one of the most efficient techniques to enhance system performance and reduce life-cycle cost of the equipment over a wide spectrum of operating environments and potential applications, especially at part-load conditions.

However, compelling reliability concerns set a lower limit to the desirable compressor speed reduction. As an example, inadequate lubrication of the compressor elements may present a problem at low operating speeds. Further, certain types of compressors require a minimum operating speed to provide radial compliance. As an example, a scroll compressor could have a dramatic loss in performance due to a loss of radial compliance should it operate below a minimum speed.

Various other features are known for providing variations in system capacity in a manner other than lowering the speed of the compressor. As an example, economizer cycles are known as are unloader cycles. However, even with the provision of these cycles in a system having a variable speed drive for its compressor, it would be desirable to provide even more variability in the system capacity.

Another approach which has been utilized in the prior art to change the capacity of a refrigerant system is the use of pulse width modulation to control valves such as a shut-off valve on an economizer cycle, and/or a shut-off valve on an unloader line, and/or a shut off valve on a suction. By rapidly cycling these valves utilizing pulse width modulation techniques, additional capacity control is provided. The pulse width modulation of the internal scroll elements can also be applied in conjunction with variable speed drive operation. In this case, as known in the art, the scroll elements are separated from each other in a pulse width manner to control the amount of refrigerant pumped by the compressor. These pulse width modulation techniques for control of a valve or internal scroll compression elements have not been utilized, however, in refrigerant systems having a variable speed drive compressor.

US 5079929 discloses a multi-stage refrigeration system which includes a reservoir for holding refrigerant at an intermediate pressure, on evaporator for evaporating liquid refrigerant from the reservoir, a first compression stage for compressing low pressure refrigerant to the intermediate pressure, a second compression stage for compressing refrigerant to a high condenser pressure, a condenser and a control valve controlled by pulse width modulation for controllably discharging the liquid refrigerant into the reservoir. The pressure in the reservoir is controlled by changing the speed of the compressor of the second compression stage.

EP 1099918 A1 discloses a refrigerant system according to the preamble of claim 1.

### SUMMARY OF THE INVENTION

The present invention provides a refrigerant system comprising:
a compressor and an electric motor for driving said compressor, a variable speed drive for varying a speed of operation of said electric motor; a condenser downstream of said compressor, an expansion device downstream of said condenser, and an evaporator downstream of said expansion device; said variable speed drive being operable to move said motor to low speed operation to operate said motor at a low level of speed; and a pulse width modulation control for controlling at least one system component; characterised in that an economizer circuit is incorporated into the refrigerant system, the economizer circuit including an economizer injection line for injecting refrigerant at an intermediate pressure into compression chambers of the compressor and in that the system is arranged such that the pulse width modulation control is operable to further reduce the system capacity by pulse width modulation control of a shut-off valve associated with said economizer circuit at times when the variable speed drive is operating said motor at a low level of speed; such that the system capacity can be lowered without lowering the compressor motor speed beyond a safe regime.

In another aspect, the present invention provides a method of operating a refrigerant system comprising the steps of:
(1) providing a compressor with a variable speed drive, and monitoring a load on a refrigerant system associated with said compressor;
(2) identifying a low load situation, and moving said compressor to a low speed operation when a low load situation has been identified; and
(3) providing pulse width modulation control for a system component to allow the variation of capacity from the refrigerant system by both varying the speed of the compressor, and varying the operation of said other component.
wherein an economizer circuit is incorporated into the refrigerant system, the economizer circuit including an economizer injection line for injecting refrigerant at an intermediate pressure into compression chambers of the compressor, and the pulse width modulation control is operated to further reduce the system capacity by pulse width modulation control of a shut-off valve associated with said economizer circuit at times when the variable speed drive is operating said motor at a low level of speed; such that the system capacity can be lowered without lowering the compressor motor speed beyond a safe regime.

In the disclosed embodiment of this invention, a compressor is provided with a variable speed drive. When a need for a low capacity is detected, the compressor is moved to a low speed to maintain adequate conditions in the environment without switching to a start-stop mode of operation. The compressor is incorporated into a refrigerant system, which has a pulse width modulation control for cycling some component in the system, other than cycling on and off the compressor motor. The cycled component includes an economiser shut off valve, and may include a suction valve and/or an unloader valve and/or the cycled component may be one of the scroll compressor pumping elements. By cycling these components on and off, the amount of refrigerant delivered to various locations in the refrigerant cycle is lowered, and thus the capacity can be lowered without lowering the compressor motor speed beyond the safe regime.

Although, for illustrative purposes, the operation of the valves in this invention is described in relation to refrigerant systems incorporating scroll compressors, it could be applicable to any variable speed compressor.

These and other features of the present invention can be best understood from the following specification and drawings, the following of which is a brief description.

### BRIEF DESCRIPTION OF THE DRAWINGS

Figure 1A is a schematic view of a refrigerant system incorporating the present invention.
Figure 1B shows an alternative embodiment.
Figure 2 shows another schematic of a refrigerant system.

### DETAILED DESCRIPTION OF THE PREFERRED EMBODIMENT

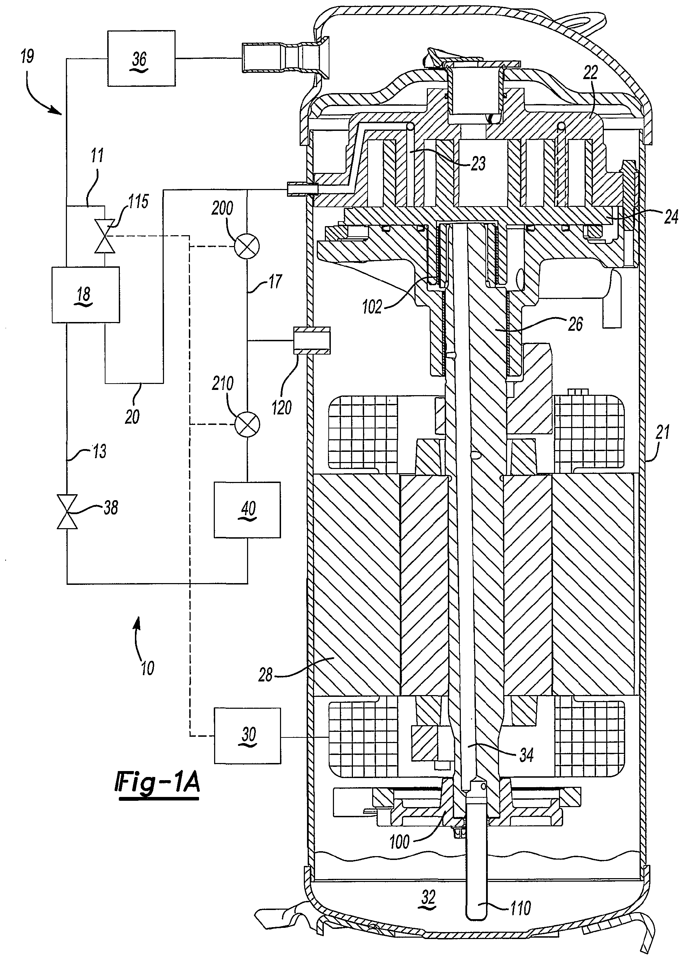

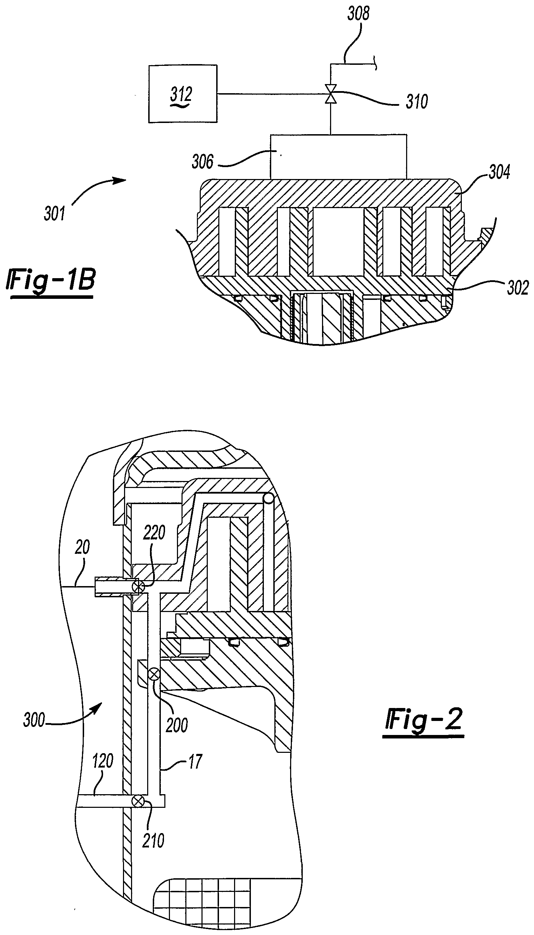

A refrigerant system 19 is illustrated in Figure 1 having a scroll compressor 21 incorporating a non-orbiting scroll member 22 and an orbiting scroll member 24. As is known, shaft 26 is driven by an electric motor 28 to cause the orbiting scroll member 24 to orbit. As shown, a variable speed drive 30 is schematically connected to drive the electric motor 28. An oil sump 32 and an oil passage 34 in the shaft 26 supply oil to the various moving elements in the compressor 21, as known.

A condenser 36 is positioned downstream of the compressor 21, an expansion device 38 is located downstream of the condenser 36, and an evaporator 40 is positioned downstream of the expansion device 38, as known. As is also known, the compressor 21 is driven by the electric motor 28 to compress the refrigerant vapor and to drive it through the refrigerant system 19. Oil from the oil sump 32 is delivered to the compressor elements to provide proper lubrication of the compressor components such as the crankcase bearing 100, orbiting scroll bearing 102, the non-orbiting scroll 22 and the orbiting scroll 24, while some amount of oil leaves the compressor 21 with the refrigerant and is circulated through the refrigerant system 19. One of the most typical oil delivery systems of a scroll compressor is also shown in Figure 1, where the oil from the oil sump 32 is picked up by the oil pick up tube 110, and delivered along the oil passage 34 to various compressor components as described above. Some of the oil can also be delivered through the suction port 120 by a refrigerant entering the compressor. However most of the oil delivery is accomplished by delivering the oil from the oil sump as described above. In the prior art, when a variable speed drive has been implemented in a refrigerant system, the designer has been limited by a minimum operational speed of the shaft 26 for the compressor 21. If the speed dropped below a certain level for extended period of time, an insufficient amount of oil would be delivered through the oil passage into the compressor components that need to be lubricated. Thus, for a low cooling load situation, where only a small amount of the compressed refrigerant mass flow is needed to be circulated through the system, a minimum speed requirement (for example 45 Hz) is often a limiting factor in ensuring that adequate amount of oil is provided to the compressor components. Further, the operation above a minimum speed would also ensure that the radial compliance necessary for efficient operation of the scroll compressor is not lost due to unduly low motor speed. As known, it is important to match the delivered capacity to the system load. Since the compressor operating speed often cannot be reduced below a certain threshold for capacity shedding, additional efficient means are required to reduce the capacity delivered by the unit without cycling the unit on and off for tight temperature control within the cooled environment. The description below provides additional means of efficiently shedding the capacity by coupling the compressor variable speed operation with pulse width modulation of different system components.

Figure 1 shows additional features that may be incorporated into the refrigerant system 19. According to the invention an economizer cycle is included. As an example, the economizer cycle has an economizer heat exchanger 18. A main liquid line 13 has a tap line 11 tapped off of the main liquid line and passed through an economizer expansion device 115. The tap line 11 and the main liquid line 13 both pass through the economizer heat exchanger 18. In fact, and in practice, the refrigerant flow in the tap line is typically in the counterflow direction through the economizer heat exchanger in relation to the flow in the main liquid line 13. However, to simplify the illustration in this figure, they are shown in the same direction. As is known, the economizer circuit subcools the refrigerant in the main liquid line, and thus enhances performance (capacity and/or efficiency) of the refrigerant system 19. An economizer injection line 20 is shown extending back to the compressor 21, and injects an intermediate pressure refrigerant into compression chambers through passages such as passage 23. The function and structure of the economizer circuit is known, however, its inclusion with the inventive motor control 30 provides a refrigerant system that has even greater flexibility to enhance operation of the refrigerant system 19.

An optional unloader line 17 includes an unloader valve 200. The unloader valve 200 is selectively opened to return partially compressed refrigerant from the compression chambers through the passages 23 back to a suction port 120 of the compressor 21. The unloader function presents a refrigerant system designer with an extra degree of freedom for performance adjustment and optimization. The unloader valve can be located inside or outside of the compressor, as known.

Essentially, when a greater system capacity is desired, the economizer function may be utilized with the unloader valve shut. Alternatively, if a lower capacity is necessary, the economizer expansion device 115 (or a separate shut-off device) is shut, with the unloader valve 200 opened. In this manner, the amount of compressed refrigerant delivered to the condenser 36 is reduced. Also, if desired to provide another intermediate stage of capacity for the refrigerant system 19, the economizer function can be combined with the unloader function by opening both the economizer expansion device 115 and the unloader valve 200. Shutting the flow in the economizer injection line and closing the unloader valve 200 also achieve another alternate intermediate stage of capacity unloading.

These system configurations in combination with the variable speed motor control disclosed below provides even greater freedom and flexibility to a refrigerant system designer for controlling the delivered system capacity

In this case, the control 30 may incorporate more than a variable speed drive, but may also be a microprocessor or other type control that is capable of providing pulse width modulation control to the economizer valve 115 (which in this case would be a shut-off valve), and/or the unloader valve 200, and/or a suction modulation valve 210.

Also as known in the art, the pulse width modulation can also be used to pulse width modulate the scroll compression elements itself, in this case the scroll elements would be separated from each other in a pulse width manner to control the amount of the refrigerant pumped by the compressor.

Figure 1B shows an embodiment 301, schematically. It is known that the orbiting scroll member 302 and the non-orbiting scroll member 304 may be biased together by a gas in a chamber 306. Opening and closing the valve 310 can control pressure in chamber 306. As shown, the valve 312 communicates via line 308 with another pressure source that is at different pressure than pressure in the chamber 306 when the valve 310 is closed. When the pressure in the chamber 306 is reduced below a certain level the scroll members will separate from each and the amount of refrigerant pumped by the compressor is then reduced. When the pressure in the chamber 306 is increased above certain level the scrolls will come into contact with each other and then the normal compression process will resume. The valve can be controlled by a pulse width modulation control 312. Thus, by modulating the pressure in the chamber 306, the two scroll members 302 and 304 can be allowed to periodically move away from, and come into contact with, each other. It should be noted that the schematic shown in Figure 1B is presented for an illustration purpose only. For example, instead of allowing the scroll 304 to move axially in and out of contact with the scroll 302, the scroll 302 can be allowed to move axially while the scroll 304 remains essentially stationary in the axial direction. The valve 312 can be located internal or external to the compressor.

While the schematic shows the control providing pulse width modulation control to each of these valves and/or compressor elements, in other embodiments any combination of the three vales and/or compressor, or even other valves can be utilized. By rapidly cycling these valves to open and closed position (closing can be partial or complete), the amount of refrigerant passing through any one of the valves and compressor can be varied to vary capacity. As an example, once the compressor speed has been lowered, and additional capacity reduction is desired, a valve or compressor can be cycled to further reduce the system capacity. It should be noted that normally the compressor speed reduction would be applied first to shed the capacity, since this is the most efficient means to do so than other methods of unloading.

The present invention provides efficient means to efficiently and precisely control capacity of the refrigerant system 19 by employing varying methods of pulse width modulation of various system components coupled with the use of a variable speed drive motor. The motor drive can be varied in speed when there is a need for capacity adjustment. The economizer circuit can also be turned on or off to vary capacity. The unloader function can also be utilized. In addition, and in combination with each of the above options for this control, the present invention also allows the control to modulate the flow of refrigerant through any one of valves 115, 200 and 210 and/or through modulation of the compressor pumping elements itself. In this manner, the capacity can be further reduced without unduly lowering the speed of the compressor motor 28 beyond its safe threshold of operation.

Figure 2 shows another embodiment 300 wherein the valves 200 and 210 are internal of the compressor shell as are the flow passages. It should be noted that while in Figure 2 the valves are all shown as located inside the compressor, a compressor designer may choose to locate some of them internally and some of them externally. In addition, the shut-off valve 220 for the economizer line is shown to be separate from the expansion valve. If the valve 220 is located externally, its function can be combined with the use of an expansion valve. Also while valves are shown as separate components, its function can be combined into a single three-way valve as known in the art. Each or some of the valves 220, 200 and 210 can be controlled by pulse width modulation techniques.

It should be understood that the motor control 30 includes a program that takes in inputs from various locations within the refrigerant system, and determines when a lower speed for the compressor motor would be desirable and when the pulse width modulation of the pulse width modulated components needs to be initiated. The controller can also decide when the system needs to be operated in economized, non-economized, and by-pass unloading modes or any of its combinations as described above. Controls capable of performing this invention with such valves and compressors are known.

A worker of ordinary skill in the art would recognize when a lower speed might be desirable and preferred in comparison or in addition to other available options.

It should be understood that although this invention is described in relation to refrigerant systems incorporating scroll compressors, it could be applicable to any variable speed compressor, including scroll compressors, screw compressors, reciprocating compressors, rotary compressors, etc. The application of this technique can for example, be applied to refrigeration systems used in transportation container units, truck/trailer application, supermarket refrigeration application, as well as cooling or heating industrial buildings and residential houses as well as used for water heating applications. Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A refrigerant system comprising:
a compressor and an electric motor for driving said compressor, a variable speed drive for varying a speed of operation of said electric motor;
a condenser downstream of said compressor, an expansion device downstream of said condenser, and an evaporator downstream of said expansion device;
said variable speed drive being operable to move said motor to low speed operation, and to operate said motor at a low level of speed; and
a control for controlling at least one system component; wherein an economizer circuit is incorporated into the refrigerant system, the economizer circuit including a shut-off valve and an economizer injection line for injecting refrigerant at an intermediate pressure into compression chambers of the compressor;
**characterized in that** the control is a pulse width modulation control and the system is arranged such that the pulse width modulation control is operable to further reduce the system capacity by pulse width modulation control of said shut-off valve associated with said economizer circuit at times when the variable speed drive is operating said motor at a low level of speed;
such that the system capacity can be lowered without lowering the compressor motor speed beyond a safe regime.

2. The refrigerant system as set forth in claim 1, wherein said compressor is provided with an unloader circuit.

3. The refrigerant system as set forth in claim 2, wherein said at least one system component includes a valve associated with said unloader circuit.

4. The refrigerant system as set forth in claim 1, wherein said at least one system component includes a valve for controlling the mass flow of refrigerant delivered to said compressor from said evaporator.

5. The refrigerant system as set forth in claim 1, wherein said at least one system component is external to a shell for said compressor.

6. The refrigerant system as set forth in claim 1, wherein said at least one system component is internal to a shell for said compressor.

7. The refrigerant system as set forth in claim 1, wherein said compressor is selected from the group consisting of a scroll compressor, a rotary compressor, a reciprocating compressor, and a screw compressor.

8. The refrigerant system as set forth in claim 1, wherein said compressor is a scroll compressor and said at least one system component includes a pulse width modulated control to hold the orbiting and non-orbiting scroll member in said scroll compressor together or allow them to move away from each other.

9. The refrigerant system as set forth in claim 1, wherein said refrigerant system is selected from the group consisting of a container refrigeration system, a truck/trailer system, a supermarket refrigeration system, a residential air conditioning system, a residential heat pump system, a commercial air conditioning system, a commercial heat pump system, and a water heating system.

10. A method of operating a refrigerant system comprising the steps of:
(1) providing a compressor with a variable speed drive, and monitoring a load on a refrigerant system associated with said compressor;
(2) identifying a low load situation, and moving said compressor to a low speed operation when a low load situation has been identified; and
(3) providing pulse width modulation control for at least one system component to allow the variation of capacity from the refrigerant system by both varying the speed of the compressor, and varying the operation of said at least one system component;
wherein an economizer circuit is incorporated into the refrigerant system, the economizer circuit including an economizer injection line for injecting refrigerant at an intermediate pressure into compression chambers of the compressor, and the pulse width modulation control is operated to further reduce the system capacity by pulse width modulation control of a shut-off valve associated with said economizer circuit at times when the variable speed drive is operating said motor at a low level of speed;
such that the system capacity can be lowered without lowering the compressor motor speed beyond a safe regime.

11. The method as set forth in claim 10, wherein said compressor is provided with an unloader circuit, and said at least one system component includes a valve associated with said unloader circuit.

12. The method as set forth in claim 10, wherein said at least one system component is external to a shell for said compressor.

13. The method as set forth in claim 10, wherein said at least one system component is internal to a shell for said compressor.

14. The method as set forth in claim 10, wherein said at least one system component includes a valve for controlling the amount of refrigerant delivered to said compressor from said evaporator.

15. The method as set forth in claim 10, wherein said at least one system component includes a pulse width modulated control to hold the orbiting and non-orbiting scroll member in a scroll compressor together or allow them to move away from each other.

## Patentansprüche

1. Kältemittelsystem, umfassend:
einen Kompressor und einen Elektromotor, um den Kompressor anzutreiben, einen drehzahlgeregelten Antrieb, um eine Betriebsdrehzahl des Elektromotors zu verändern;
einen Kondensator, der dem Kompressor nachgeschaltet ist, ein Expansionsorgan, das dem Kondensator nachgeschaltet ist, und einen Verdampfer, der dem Expansionsorgan nachgeschaltet ist;
wobei der drehzahlgeregelte Antrieb betrieben werden kann, um den Motor auf einen Betrieb mit niedriger Drehzahl einzustellen und den Motor bei niedriger Drehzahl zu betreiben; und
eine Steuerung, um mindestens eine Systemkomponente zu steuern;
wobei eine Sparschaltung in das Kältemittelsystem integriert ist, wobei die Sparschaltung ein Sperrventil und eine Sparanlagen-Einspritzleitung, um Kältemittel mit einem Zwischendruck in die Kompressionskammern des Kompressors zu spritzen, umfasst;
**dadurch gekennzeichnet, dass** die Steuerung eine Steuerung mit Pulsbreitenmodulation ist und das System so angeordnet ist, dass die Steuerung mit Pulsbreitenmodulation betrieben werden kann, um die Systemleistung durch die Steuerung mit Pulsbreitenmodulation des Sperrventils in Verbindung mit der Sparschaltung in Zeiten, in denen der drehzahlgeregelte Antrieb den Motor bei niedriger Drehzahl betreibt, weiter zu reduzieren;
so dass die Systemleistung herabgesetzt werden kann, ohne die Drehzahl des Kompressormotors jenseits eines sicheren Betriebszustands herabzusetzen.

2. Kältemittelsystem nach Anspruch 1, wobei der Kompressor mit einer Entlastungsschaltung versehen ist.

3. Kältemittelsystem nach Anspruch 2, wobei die mindestens eine Systemkomponente ein Ventil in Verbindung mit der Entlastungsschaltung umfasst.

4. Kältemittelsystem nach Anspruch 1, wobei die mindestens eine Systemkomponente ein Ventil zur Steuerung des Massenstroms des Kältemittels, das an den Kompressor vom Verdampfer geliefert wird, umfasst.

5. Kältemittelsystem nach Anspruch 1, wobei mindestens eine Systemkomponente außerhalb einer Hülle für den Kompressor liegt.

6. Kältemittelsystem nach Anspruch 1, wobei die mindestens eine Systemkomponente innerhalb einer Hülle für den Kompressor liegt.

7. Kältemittelsystem nach Anspruch 1, wobei der Kompressor aus der Gruppe ausgewählt ist, die aus einem Scroll-Verdichter, einem Rotationskompressor, einem Kolbenkompressor und einem Schraubenverdichter besteht.

8. Kältemittelsystem nach Anspruch 1, wobei der Kompressor ein Scroll-Verdichter ist und mindestens eine Systemkomponente eine pulsbreitenmodulierte Steuerung umfasst, um das umlaufende und das nicht umlaufende Scroll-Element in diesem Scroll-Verdichter zusammenzuhalten oder es ihnen zu ermöglichen, sich voneinander weg zu bewegen.

9. Kältemittelsystem nach Anspruch 1, wobei das Kältemittelsystem aus der Gruppe ausgewählt ist, die aus einem Behälterkühlsystem, einem Lastwagen-/Anhängersystem, einem Supermarktkühlsystem, einer Klimaanlage für ein Wohngebäude, einem Wärmepumpensystem für ein Wohngebäude, einer Klimaanlage für ein Geschäftsgebäude, einem Wärmepumpensystem für ein Geschäftsgebäude und einer Wassererwärmungsanlage besteht.

10. Verfahren zum Betreiben eines Kältemittelsystems, umfassend die folgenden Schritte:
(1) Bereitstellen eines Kompressors mit einem drehzahlgeregelten Antrieb und Überwachen einer Last an einem Kältemittelsystem in Verbindung mit dem Kompressor;
(2) Identifizieren einer Schwachlastsituation und Einstellen des Kompressors auf einen Betrieb bei niedriger Drehzahl, wenn eine Schwachlastsituation identifiziert wurde; und
(3) Bereitstellen einer Steuerung mit Pulsbreitenmodulation für mindestens eine Systemkomponente, um die Veränderung der Leistung vom Kältemittelsystem zu ermöglichen, indem sowohl die Drehzahl des Kompressors verändert wird als auch der Betrieb der mindestens einen Systemkomponente verändert wird;
wobei eine Sparschaltung in das Kältemittelsystem integriert ist, wobei die Sparschaltung eine Sparanlagen-Einspritzleitung, um Kältemittel mit einem Zwischendruck in die Kompressionskammern des Kompressors zu spritzen, umfasst und die Steuerung mit Pulsbreitenmodulation betrieben wird, um die Systemleistung durch die Steuerung mit Pulsbreitenmodulation eines Sperrventils in Verbindung mit der Sparschaltung in Zeiten, in denen der drehzahlgeregelte Antrieb den Motor bei niedriger Drehzahl betreibt, weiter zu reduzieren;
so dass die Systemleistung herabgesetzt werden kann, ohne die Drehzahl des Kompressormotors jenseits eines sicheren Betriebszustands herabzusetzen.

11. Verfahren nach Anspruch 10, wobei der Kompressor mit einer Entlastungsschaltung versehen ist und die mindestens eine Systemkomponente ein Ventil in Verbindung mit der Entlastungsschaltung umfasst.

12. Verfahren nach Anspruch 10, wobei mindestens eine Systemkomponente außerhalb einer Hülle für den Kompressor liegt.

13. Verfahren nach Anspruch 10, wobei mindestens eine Systemkomponente innerhalb einer Hülle für den Kompressor liegt.

14. Verfahren nach Anspruch 10, wobei mindestens eine Systemkomponente ein Ventil umfasst, um die Menge des Kältemittels, das dem Kompressor vom Verdichter geliefert wird, zu steuern.

15. Verfahren nach Anspruch 10, wobei die mindestens eine Systemkomponente eine pulsbreitenmodulierte Steuerung umfasst, um das umlaufende und das nicht umlaufende Scroll-Element in einem Scroll-Verdichter zusammenzuhalten oder es ihnen zu ermöglichen, sich voneinander weg zu bewegen.

## Revendications

1. Système frigorifique comprenant :
un compresseur et un moteur électrique pour entraîner ledit compresseur, un variateur de vitesse pour faire varier une vitesse de fonctionnement dudit moteur électrique ;
un condenseur en aval dudit compresseur, un détendeur en aval dudit condenseur, et un évaporateur en aval dudit détendeur ;
ledit variateur de vitesse pouvant être utilisé pour basculer ledit moteur dans un fonctionnement à basse vitesse, et pour faire fonctionner ledit moteur à un bas niveau de vitesse ; et
une commande pour commander au moins un composant du système ;
dans lequel un circuit économiseur est intégré dans le système frigorifique, le circuit économiseur comportant une vanne d'isolement et une conduite d'injection d'économiseur permettant d'injecter un agent frigorigène à une pression intermédiaire dans des chambres de compression du compresseur, **caractérisé en ce que** la commande est une commande par modulation de largeur d'impulsions et le système est agencé de sorte que la commande par modulation de largeur d'impulsions peut être utilisé pour réduire encore la capacité du système par une commande par modulation de largeur d'impulsions de ladite vanne d'isolement associée audit circuit économiseur aux moments où le variateur de vitesse fait fonctionner ledit moteur à un bas niveau de vitesse ;
de sorte que la capacité du système peut être réduite sans réduction de la vitesse du moteur du compresseur au-delà d'un régime de sécurité.

2. Système frigorifique selon la revendication 1, dans lequel ledit compresseur est pourvu d'un circuit de décharge.

3. Système frigorifique selon la revendication 2, dans lequel ledit au moins un composant du système comprend une vanne associée audit circuit de décharge.

4. Système frigorifique selon la revendication 1, dans lequel ledit au moins un composant du système comprend une vanne pour commander le débit massique d'agent frigorigène délivré audit compresseur par ledit évaporateur.

5. Système frigorifique selon la revendication 1, dans lequel ledit au moins un composant du système est situé à l'extérieur d'une enveloppe dudit compresseur.

6. Système frigorifique selon la revendication 1, dans lequel ledit au moins un composant du système est situé à l'intérieur d'une enveloppe dudit compresseur.

7. Système frigorifique selon la revendication 1, dans lequel ledit compresseur est choisi dans le groupe comprenant un compresseur à volute, un compresseur rotatif, un compresseur alternatif et un compresseur à vis.

8. Système frigorifique selon la revendication 1, dans lequel ledit compresseur est un compresseur à volute et ledit au moins un composant du système comprend une commande à modulation de largeur d'impulsions permettant de maintenir ensemble les éléments de volute orbital et non orbital dudit compresseur à volute ou de les laisser s'éloigner l'un de l'autre.

9. Système frigorifique selon la revendication 1, dans lequel ledit système frigorifique est choisi dans le groupe comprenant un système de conteneurs réfrigérés, un système de camion/remorque, un système de réfrigération de supermarché, un système de climatisation domestique, un système de pompe à chaleur domestique, un système de climatisation commercial, un système de pompe à chaleur commercial, et un système de chauffage d'eau.

10. Procédé de fonctionnement d'un système frigorifique comprenant les étapes de :
(1) fourniture d'un compresseur avec un variateur de vitesse, et surveillance d'une charge sur un système frigorifique associé audit compresseur ;
(2) identification d'une situation de faible charge, et basculement dudit compresseur dans un fonctionnement à basse vitesse lorsqu'une situation de faible charge a été identifiée ; et
(3) fourniture d'une commande par modulation de largeur d'impulsions pour au moins un composant du système pour permettre la variation de la capacité du système frigorifique à la fois par variation de la vitesse du compresseur et par variation du fonctionnement dudit au moins un composant du système ;
dans lequel un circuit économiseur est intégré dans le système frigorifique, le circuit économiseur comportant une conduite d'injection d'économiseur permettant d'injecter un agent frigorigène à une pression intermédiaire dans des chambres de compression du compresseur, et la commande par modulation de largeur d'impulsions est utilisée pour réduire encore la capacité du système par une commande par modulation de largeur d'impulsions d'une vanne d'isolement associée audit circuit économiseur aux moments où le variateur de vitesse fait fonctionner ledit moteur à un bas niveau de vitesse ;
de sorte que la capacité du système peut être réduite sans réduction de la vitesse du moteur du compresseur au-delà d'un régime de sécurité.

11. Procédé selon la revendication 10, dans lequel ledit compresseur est pourvu d'un circuit de décharge, et ledit au moins un composant du système comprend une vanne associée audit circuit de décharge.

12. Procédé selon la revendication 10, dans lequel ledit au moins un composant du système est situé à l'extérieur d'une enveloppe dudit compresseur.

13. Procédé selon la revendication 10, dans lequel ledit au moins un composant du système est situé à l'intérieur d'une enveloppe dudit compresseur.

14. Procédé selon la revendication 10, dans lequel ledit au moins un composant du système comprend une vanne permettant de commander la quantité d'agent frigorigène délivrée audit compresseur par ledit évaporateur.

15. Procédé selon la revendication 10, dans lequel ledit au moins un composant du système comprend une commande à modulation de largeur d'impulsions permettant de maintenir ensemble les éléments de volute orbital et non orbital d'un compresseur à volute ou de les laisser s'éloigner l'un de l'autre.
